# EUROPÄISCHE PATENTANMELDUNG

(11) **EP 0 623 762 A1**
(43) Veröffentlichungstag der Anmeldung: **09.11.1994**
(21) Anmeldenummer: 94103261.7
(22) Anmeldetag: 04.03.1994
(51) Int. Cl.: F16D 65/16

(54) **Druckluftbetätigte Scheibenbremse**

(30) Priorität: 04.05.1993 DE 4314720
(71) Anmelder: KNORR-BREMSE SYSTEME FÜR NUTZFAHRZEUGE GmbH, 80809 München (DE)
(72) Erfinder: Baumgartner, Hans, D-85368 Moosburg (DE); Bieker, Dieter, D-81827 München (DE); Iraschko, Johann, D-85301 Schweitenkirchen (DE)

(57) **Zusammenfassung**

Es wird eine druckluftbetätigte Scheibenbremse offenbart, die einen eine Bremsscheibe (1) umfassenden Bremssattel (2) aufweist, auf dessen einer Seite eine Zuspannvorrichtung (3) mit einem schwenkbar gelagerten Drehhebel (4) angeordnet ist, dessen Hebelarm (4a) mit der Druckstange (47,48) eines Druckluftzylinders (40) über ein Kugelpfannenlager (50,51) gelenkig in Eingriff steht und der über einen Exzenter (6) auf eine bezüglich der Bremsscheibe (1) verschiebbar geführte Traverse (7) einwirkt, die bei Druckluftbeaufschlagung des Druckluftzylinders (40) und entsprechender Verschwenkung des Drehhebels (4) eine an ihrem bremsscheibenseitigen Ende angeordnete Bremsbacke (10) gegen die Bremsscheibe (1) drückt. Um einen optimalen Wirkungsgrad und gute Serviceeigenschaften zu erzielen, wird vorgeschlagen, zwischen der Kugel (50) und der Pfanne (51) des Kugelpfannenlagers (50,51) ein Gleitlager (52) anzuordnen, dessen druckbeaufschlagte Gleitfläche aus mindestens **70** Vol.-% Polyvinylidenfluorid, mindestens **10** Vol.-% Polytetrafluoräthylen und im übrigen aus Blei besteht.

## Beschreibung

Die vorliegende Erfindung bezieht sich auf eine druckluftbetätigte Scheibenbremse gemäß dem Oberbegriff des Anspruchs 1, die insbesondere für Straßennutzfahrzeuge vorgesehen ist.

Druckluftbetätigte bzw. pneumatische Scheibenbremsen der gattungsgemäßen Art sind beispielsweise aus der **DE-OS 37 16 202**, der **DE-OS 40 32 885** sowie aus der nicht vorveröffentlichten **DE-OS 42 12 384** bekannt. Bei diesen bekannten Scheibenbremsen wird eine Bremsscheibe von einem in Axialrichtung verschiebbar gelagerten Bremssattel umfaßt, wobei auf einer Seite des Bremssattels eine druckluftbetätigte Zuspannvorrichtung angeordnet ist, bei deren Betätigung eine auf dieser Seite der Bremsscheibe befindliche Bremsbacke gegen die betreffende Reibfläche der Bremsscheibe gedrückt wird, worauf sich der Bremssattel aufgrund der Reaktionskräfte in Gegenrichtung verschiebt und dadurch eine auf der gegenüberliegenden Seite befindliche Bremsbacke gleichfalls gegen die Bremsscheibe preßt.

Die Zuspannvorrichtung weist bei diesen bekannten Scheibenbremsen als Betätigungsorgan einen Drehhebel auf, der um eine zur Ebene der Bremsscheibe parallel verlaufende Drehachse schwenkbar gelagert ist. Der Drehhebel liegt hierbei auf seiner der Bremsscheibe zugewandten Seite mittels eines Exzenters etwa längsmittig an einer sich parallel zur Drehachse erstreckenden Traverse an, die bezüglich der Bremsscheibe verschiebbar geführt ist und in der mindestens eine mit einem Außengewinde versehene Stellspindel in einem jeweils zugeordneten Innengewinde der Traverse verstellbar verschraubt ist. Je nach Anzahl der verwendeten Stellspindeln wird eine derartige Zuspannvorrichtung als "einspindelig" oder als "zweispindelig" bezeichnet.

Zur Betätigung des Drehhebels ist ein Druckluftzylinder vorgesehen, der bei Druckluftbeaufschlagung eine ausgangsseitige Druckstange eine bestimmte Strecke verschiebt, so daß, da das Ende der Druckstange über ein Kugelpfannenlager mit dem Ende des Hebelarms des Drehhebels gelenkig in Eingriff steht, der Drehhebel um ein entsprechendes Maß verschwenkt wird und seinerseits über den Exzenter, wie vorstehend erläutert, die Traverse zur Bremsscheibe hin verschiebt. Das genannte Kugelpfannenlager ist bei den bekannten Zuspannvorrichtungen durch eine am Ende des Hebelarms des Drehhebels ausgebildete Pfanne in Form einer kalottenförmigen Aussparung gebildet, in die das als Halbkugel geformte Ende der Druckstange eingreift.

Im Hinblick auf einen möglichst hohen Wirkungsgrad der Zuspannvorrichtung sowie insbesondere auch unter Berücksichtigung der Optimierung ihrer Hystereseeigenschaften ist bei den bekannten Zuspannvorrichtungen vorgesehen, die Kontaktfläche zwischen der Pfanne und der Halbkugel im Betrieb mit einer Fettschmierung zu versehen, um durch entsprechende Verringerung der Flächenreibung die gewünschten Betriebseigenschaften zu erreichen und gleichzeitig den Verschleiß zu verringern. Untersuchungen bei den eingangs genannten Zuspannvorrichtungen haben beispielsweise ergeben, daß sich durch Verringerung der Reibungsbeiwerte der Hebelmechanik eine deutliche Verbesserung des Hystereseverhaltens der Bremse erzielen läßt. Weiterhin wurde bereits in Erwägung gezogen, das als Halbkugel geformte Ende der Druckstange zu härten, um dadurch den Verschleiß weiter zu verringern.

Die Fettschmierung bereitet in der Praxis jedoch insofern Probleme, als eine Lebensdauer-Schmierung bei den üblichen Betriebsbedingungen kaum realisierbar ist, so daß die von Zeit zu Zeit erforderliche Nachschmierung eine Demontage der Zuspannvorrichtung erfordert, was jedoch mit hohen Werkstattkosten verbunden ist. Die genannte Härtung des Endes der Druckstange erhöht demgegenüber die Herstellungskosten des Druckluftzylinders nicht unerheblich, weshalb auch diese Maßnahme als nachteilig empfunden wird.

Zur Vermeidung der oben genannten Nachteile der herkömmlichen Kugelpfannenlagerung zwischen Druckstange und Drehhebel könnte prinzipiell daran gedacht werden, an dieser Stelle ein Gleitlager vorzusehen. Versuche der Anmelderin mit derartigen Lagern haben bislang jedoch zu keinen befriedigenden Ergebnissen geführt; insbesondere war es bislang nicht möglich, ein Lager zu finden, das so geringe Reibbeiwerte aufweist, daß die erzielbare Hysterese befriedigend ist. Der Einsatz eines Gleitlagers wurde bislang insbesondere auch deshalb verworfen, weil die bei der bevorzugten Geometrie der Hebelanordnung auftretenden Lagerbelastungen die maximale Belastbarkeit der untersuchten Gleitlager überschritten haben, so daß keine ausreichrend hohe Lebensdauer erzielt werden konnte.

Der Erfindung liegt die Aufgabe zugrunde, eine druckluftbetätigte Scheibenbremse gemäß dem Oberbegriff des Anspruchs 1 derart weiterzubilden, daß die Herstellungs- und Wartungskosten der Zuspannvorrichtung bei gleichbleibend guter Bremshysterese deutlich verringert werden können.

Diese Aufgabe wird erfindungsgemäß mit dem im Kennzeichnungsteil des Anspruchs 1 angegebenen Maßnahmen gelöst.

Erfindungsgemäß ist demnach vorgesehen, daß zwischen der Kugel und der Pfanne des Kugelpfannenlagers ein Gleitlager angeordnet ist, dessen druckbeaufschlagte Gleitfläche aus mindestens **70** Vol.-% Polyvinylidenfluorid, mindestens **10** Vol.-% Polytetrafluoräthylen und im übrigen aus Blei besteht. Untersuchungen haben überraschend ergeben, daß ein die genannte Zusammensetzung aufweisendes Gleitlager bei den im Betrieb der Hebelmechanik bzw. des Kugelpfannenlagers auftretenden dynamischen Beanspruchungen selbst dann nicht ausfällt und eine in jedem Fall ausreichende, außerordentlich lange Lebensdauer aufweist, wenn es unter extrem hohen Belastungswerten betrieben wird. Das genannte Gleitlager hat darüberhinaus die Eigenschaft, daß sich sein Reibbeiwert im hochbelasteten Zustand wesentlich verringert, so daß die erfindungsgemäß erzielten Reibbeiwerte selbst die eines Rollenlagers erreichen oder gar übertreffen, wobei die Reibbeiwerte der herkömmlichen Fettschmierung in jedem Fall übertroffen werden.

Da ein derartiges Gleitlager vergleichsweise billig ist, werden die Herstellungskosten der Zuspannvorrichtung erfindungsgemäß hierdurch nicht nennenswert beeinflußt. Aufgrund des geringen Reibbeiwerts des erfindungsgemäßen Gleitlagers wird darüberhinaus ein äußerst günstiger Wirkungsgrad der Hebelmechanik erreicht, so daß die damit ausgerüstete Scheibenbremse ein sehr gutes Hystereseverhalten aufweist.

Besonders vorteilhafte Eigenschaften des erfindungsgemäßen Lagers wurden dann erzielt, wenn dieses gemäß den Angaben der Ansprüche 2 bis 6 aufgebaut ist, wobei ein derartiges Gleitlager vorzugsweise Schmiertaschen aufweisen sollte, da in diesem Fall die Reibbeiwerte weiter verringert werden und langzeitlich konstant bleiben. Im übrigen kann selbst bei dem gemäß Anspruch 7 vorgesehenen Betrieb des Gleitlagers im geschmierten Zustand auf eine regelmäßige bzw. mehrfache Schmierung verzichtet werden, so daß insoweit eine Lebensdauer-Schmierung geschaffen wird, die folglich keine zusätzlichen Werkstattkosten hervorruft.

Bei der Dimensionierung der Lagerflächen sollte gemäß der im Anspruch 8 angegebenen Weiterbildung der Erfindung angestrebt werden, daß die druckbeaufschlagte Gleitfläche des Gleitlagers eine derartige Ausdehnung aufweist, daß die bei maximaler Druckbeaufschlagung des Kugelpfannenlagers auftretende Lagerbeanspruchung mindestens **200** N/mm2, vorzugsweise bis zu **300** N/mm2 beträgt. Diese Belastungswerte haben selbst nach extremen Dauerversuchen zu keinem Lagerausfall geführt und erlauben aufgrund der erwähnten Eigenschaft des Lagers, daß sich der Reibbeiwert bei erhöhtem Druck verbessert, die Einstellung eines optimalen Hystereseverlaufes. Bei dieser Dimensionierung des Lagers sollte gemäß Aspruch 9 ferner angestrebt werden, daß der Umschlingungswinkel weniger als **120** Grad beträgt, da hierdurch jegliches Klemmen des Kugelpfannenlagers und damit der Zuspannvorrichtung sicher verhindert werden kann.

Eine vorteilhafte Befestigung des Gleitlagers in der Pfanne kann gemäß Anspruch 10 beispielsweise dadurch erzielt werden, daß im Gleitlager ein zur Pfanne weisender zylinderförmiger Durchzug ausgebildet wird, der in ein entsprechend geformtes Sackloch der Pfanne eingreift. Vorzugsweise werden der zylinderförmige Durchzug und das Sackloch der Pfanne dabei so dimensioniert, daß eine Preßpassung erzielbar ist, wobei es weiterhin von Vorteil ist, den zylinderförmigen Durchzug im Zentrum des Gleitlagers auszubilden.

Bei dem erfindungsgemäßen Kugelpfannenlager kann die Pfanne entweder am Hebelarm des Drehhebels oder am Ende der Druckstange des Druckluftzylinders ausgebildet sein, wobei ein wesentlicher Aspekt der Erfindung in beiden Fällen jedoch darin liegt, daß die Kugel des Kugelpfannenlagers im Gegensatz zum Stand der Technik nicht aus einem gehärteten Halbkugel-Ansatz besteht, sondern vielmehr aus einer in eine entsprechende halbkugelförmige Ausnehmung der Druckstange bzw. des Hebelarms eingesetzten oder auch eingeschweißten Wälzlagerkugel. Eine derartige Wälzlagerkugel ist als Standard-Bauteil verfügbar und daher trotz ihres hohen Härtungsgrades wesentlich billiger als die Durchführung eines entsprechenden Härtungsprozesses beim Halbkugel-Ansatz der Druckstange bei den bekannten Zuspannvorrichtungen. Darüber hinaus hat eine derartige Wälzlagerkugel nahezu ideale Oberflächeneigenschaften bzw. eine hervorragende Rundheit, so daß die Lagerungseigenschaften hinsichtlich Wirkungsgrad und Hysterese weiter verbessert werden. Die erfindungsgemäße Wälzlagerkugel kann im übrigen besonders vorteilhaft durch Reibschweißung in der halbkugelförmigen Ausnehmung befestigt werden.

Die Erfindung wird nachstehend anhand der Beschreibung von Ausführungsbeispielen unter Bezugnahme auf die Zeichnung näher erläutert. Es zeigen:
**Fig.1** anhand eines Querschnitts den schematischen Aufbau der Zuspannvorrichtung;
**Fig.2** eine vergrößerte Detaillansicht der Fig.1 zur Erläuterung einer ersten Ausführungsform des erfindungsgemäßen Kugelpfannenlagers; und
**Fig.3** eine vergrößerte Detaillansicht der Fig.1 zur Erläuterung einer zweiten Ausführungsform des erfindungsgemäßen Kugelpfannenlagers.

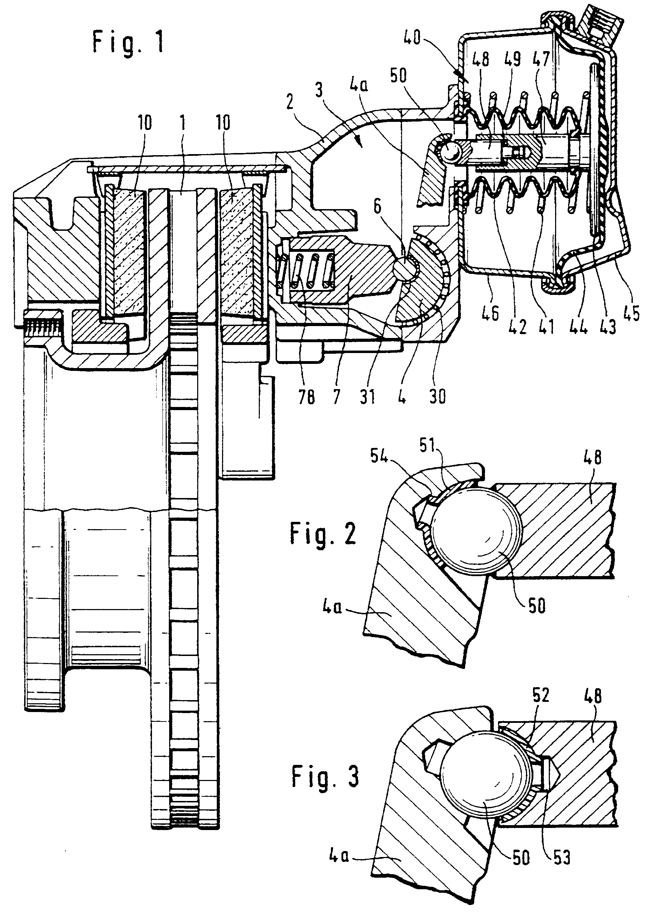

Wie aus der Fig.1 zu erkennen ist, wird eine (innenbelüftete) Bremsscheibe 1, die an einer nicht näher bezeichneten Achse eines Nutzfahrzeugs befestigt ist, von einem Bremssattel 2 umfaßt. Der Bremssattel 2 ist mittels eines (nicht gezeigten) starren Führungslagers sowie mittels eines (glichfalls nicht gezeigten) Ausgleichslagers in axialer Verschiebbarkeit bezüglich der Bremsscheibe 1 am Fahrzeug gelagert. Im übrigen sind Aufbau und Funktion des Bremssattels bekannt, so daß sich eine nähere Erläuterung erübrigt.

Auf der in Fig.1 rechten Seite der Bremsscheibe 1 ist eine schematisch mit dem Bezugszeichen 3 bezeichnete Zuspannvorrichtung angeordnet. Im Bremssattel 2 ist ein im wesentlichen halbkreisförmiges Drehlager 30 vorgesehen, das die Bremsscheibenachse rechtwinklig kreuzt bzw. parallel zur Ebene der Bremsscheibe 1 verläuft und den entsprechend abgerundeten Rückenbereich eines Drehhebels 4 aufnimmt. Der Drehhebel 4 kann daher um eine zur Ebene der Bremsscheibe 1 parallel verlaufende Drehachse geschwenkt werden; zur Betätigung des Drehhebels 4 ist ein einen bekannten Aufbau aufweisender Bremszylinder 40 vorgesehen, der eine zweiteilige Druckstange 47, 48 aufweist, die über ein später noch ausführlich zu erläuterndes Kugelpfannenlager oder -gelenk mit einem Hebelarm (Betätigungsarm) 4a des Drehhebels 4 gelenkig in Eingriff steht.

Der Bremszylinder 40 besteht im wesentlichen aus einem aus zwei Gehäuseschalen 45 und 46 gebildeten Gehäuse, das durch eine flexible Membran 44 luftdicht in zwei Kammern unterteilt ist, von denen die der Scheibenbremse abgewandte oder "äußere" Kammer mit einer Druckluft-Zuleitung kommuniziert. An der der "inneren" Kammer zugewandten Seite der Membran 44 ist eine Druckplatte 43 befestigt, an der ihrerseits die erste (47) der beiden Druckstangen sowie eine Rückholfeder 41 befestigt sind. In der Druckstange 47 ist koaxial die andere Druckstange 48 befestigt; durch diese Zweiteilung der Druckstange ist es - ggf. unter zusätzlicher Verwendung von Distanzscheiben - möglich, die Länge der Druckstange bezüglich des Drehhebels 4 exakt zu justieren. Schließlich weist die innere Kammer noch einen Faltenbalg 42 auf, so daß jedes Eindringen von Schmutz in das Innere der Zuspannvorrichtung sicher verhindert werden kann.

Wenn der Bremszylinder 40 bzw. dessen äußere Kammer mit Druckluft beaufschlagt wird, wird die Druckstange 47, 48 aus ihrer Ruheposition heraus zur Scheibenbremse hin bewegt, so daß der Hebelarm 4a des Drehhebels 4 von seiner in Fig.1 gezeigten Ruheposition nach links zur Bremsscheibe hin verschwenkt wird. Es sei angemerkt, daß die Betätigung des Drehhebels 4 selbstverständlich auch über ein längeres Bremsgestänge erfolgen kann, dessen Ende der gezeigten Druckstange entspricht, so daß der Bremszylinder 40 gegebenenfalls an einem anderen Ort plaziert werden kann, falls der verfügbare Einbauraum für die Scheibenbremse bzw. deren Zuspannvorrichtung begrenzt ist.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene bewegbar ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenen Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

Die Traverse 7 weist an beiden Seiten jeweils eine mit einem Innengewinde versehene Bohrung auf, in der jeweils eine (nicht gezeigte) Stellspindel justierbar verschraubt ist. An dem der Bremsscheibe 1 zugewandten Ende jeder der Stellspindeln ist ein sich kegelförmig verbreiterndes Druckstück befestigt, das an einer Bremsbacke 10 anliegt. Die Bremsbacke 10 ist insbesondere in Umfangsrichtung zur Bremsscheibe 1 über nicht gezeigte Halterungen quer zur Bremsscheibe 1 verschiebbar geführt, wobei die Halterungen entweder dem Bremssattel 2 oder einem Bremsträger zugeordnet sein können. Zum Ausgleich des Abriebs der Bremsbacke 10 ist im Inneren einer der beiden Stellspindelen eine Nachstelleinrichtung angeordnet, die bei jeder Betätigung des Drehhebels 4 um einen bestimmten Winkelbetrag gedreht wird, wodurch ein kontinuierliches Nachstellen der Bremse gewährleistet ist. Obgleich bei der beschriebenen Ausführungsform der Traverse 7 zwei Stellspindeln und damit zwei Druckstücke vorgesehen sind, ist die Erfindung gleichwohl auch für eine solche Traverse verwendbar, die lediglich eine einzige Stellspindel und damit nur ein Druckstück aufweist.

Nachfolgend wird das Arbeitsprinzip der Zuspanneinrichtung kurz erläutert. Bei Druckluftbeaufschlagung des Bremszylinders 40 wird der Hebelarm 4a gemäß Fig.1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 eine entsprechende Wegstrecke zur Bremsscheibe 1 hin gedrückt. Die an der Traverse 7 befestigten Druckstücke drücken folglich unter Überwindung des Lüftspiels die Bremsbacke 10 gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in Fig.1 nach rechts, so daß schließlich auch die linke Bremsbacke 10 gegen die Bremsscheibe 1 gepreßt wird. Wenn die Bremsbacken 10 im Verlauf des vorstehend erläuterten Zuspannvorgangs um eine vorbestimmte, einem Soll-Lüftspiel entsprechende Strecke verschoben worden sind, wird die Nachstelleinrichtung vom Drehhebel 4 betätigt. Sofern das Lüftspiel korrekt eingestellt ist, liegen beide Bremsbacken 10 zu diesem Zeitpunkt an der Bremsscheibe 1 an. Infolgedessen spricht eine in der Nachstelleinrichtung vorgesehene Rutschkupplung an. Wenn demgegenüber ein zu großes Lüftspiel vorliegt, was beispielsweise nach einem Belagwechsel oder bei zunehmendem Verschleiß der Bremsbacken der Fall ist, drehen sich die Stellspindeln um eine bestimmte Strecke und bringen dadurch das Lüftspiel, gegebenenfalls nach mehrmaliger Betätigung der Bremse, auf den Sollwert.

Im übrigen wird wegen weiterer Einzelheiten sowie noch detaillierterer Funktionsabläufe auf die eingangs erwähnten Druckschriften der Anmelderin verwiesen, auf deren Offenbarung hiermit vollinhaltlich bezug genommen wird.

Nachfolgend wird der erfindungsgemäße Aufbau des Kugelpfannenlagers unter Bezugnahme auf die Figuren 2 und 3 näher beschrieben.

Bei der in Fig.2 gezeigten Ausführungsform des Kugelpfannenlagers ist am Ende des Hebelarms 4a des Drehhebels 4 eine halbkugelförmige oder kalottenförmige Ausnehmung 51 beispielsweise durch Fräsen ausgebildet; diese Ausnehmung bildet die Pfanne des Kugelpfannenlagers. In dieser Pfanne sitzt erfindungsgemäß ein Gleitlager 52, dessen druckbeaufschlagte Gleitfläche vorzugsweise so dimensioniert ist, daß die Nennbelastbarkeit bei Druckluftbetätigung maximal zwischen 200 und 300 N/mm² beträgt. Die erforderliche Dimensionierung des Gleitlagers 52 läßt sich beispielsweise durch geeignete Wahl des Durchmessers der Pfanne 51 erreichen. Die Lagerbelastung kann selbstverständlich auch durch Verringerung der Fläche des Gleitlagers 52 erhöht werden, wobei anzustreben ist, den Umschlingungswinkel nicht größer als 120 Grad zu machen, um jedes Verklemmen sicher zu verhindern.

Bei dem Gleitlager 52 handelt es sich erfindungsgemäß um ein Lager, das aus einer Gleitschicht, einer Bronzeschicht sowie einem als Basis dienenden Stahlrücken gebildet ist, wobei die Gleitschicht mindestens 70, vorzugsweise 80 Vol.-% Polyvinylidenfluorid (PVDF), mindestens 10 Vol-% Polytetrafuoräthylen (PTFE) und im übrigen Blei enthält und ca 0.05 bis 0,1 mm dick ist. Die Bronze-Zwischenschicht besteht vorzugsweise aus einem porösen Material. In der druckbeaufschlagten Gleitfläche des Lagers 52 sind in einer bevorzugten Ausführungsform ferner Schmiertaschen ausgebildet.

Bei der erfindungsgemäßen Betriebsart des Gleitlagers 52, bei dem dieses in einem relativ sehr hohen Lastzustand betrieben wird, verringert sich der Reibbeiwert gegenüber dem entsprechenden Wert bei geringer Belastung des Lagers um einen erheblichen Faktor. Hierdurch wird der Wirkungsgrad der Hebelmechanik der Zuspannvorrichtung deutlich verbessert, was sich günstig auf das Hystereseverhalten beim Bremsen auswirkt.

Ausführliche Langzeituntersuchungen haben bestätigt, daß das gemäß der Lehre der Erfindung aufgebaute Gleitlager im Gegensatz zu allen anderen untersuchten Lagern eine Lebensdauer aufweist, die den Anforderungen der Praxis in jedem Fall gerecht wird; ein weiterer Vorteil dieses Gleitlagers liegt darin, daß auch dann keine Beschädigung des Lagers auftritt, wenn bei voller Druckluftbeaufschlagung (maximale Betätigung des Bremspedals) gleichzeitig die Feststellbremse betätigt wird; d.h., das erfindungsgemäße Lager kann ohne weiteres den doppelten bis dreifachen Nenndruck aushalten.

Weiterhin hat es sich als vorteilhaft erwiesen, das Gleitlager 52 bei der Montage der Zuspannvorrichtung mit einem geeigneten Schmiermittel zu schmieren; Langzeituntersuchungen haben in diesem Zusammenhang bestätigt, daß diese Schmierung für die gesamte Standzeit der Zuspannvorrichtung ausreichend ist, so daß keine zusätzlichen Schmierstoffe bei Wartungsarbeiten zugeführt werden müssen; hierdurch wird die Servicefreundlichkeit entscheidend verbessert.

Die in Fig.3 gezeigte Ausführungsform des Kugelpfannenlagers unterscheidet sich von der Ausführungsform der Fig.2 darin, daß die Pfanne am Ende der Druckstange 48 ausgebildet ist; d.h. am stirnseitigen Ende der Druckstange 48 ist eine halbkugelförmige oder kalottenförmige Ausnehmung 51 beispielsweise durch Fräsen ausgebildet; auch in dieser Ausnehmung bzw. Pfanne sitzt erfindungsgemäß ein Gleitlager 52, das den oben erläuterten Aufbau aufweist und zur Erzielung der gewünschten Druckbeaufschlagung geeignet dimensioniert ist.

Wie aus der Darstellung der Fig.2 und 3 deutlich hervorgeht ist im Gleitlager 52 ein zur Pfanne hin weisender zylinderförmiger Durchzug 54 ausgebildet, der in ein entsprechend geformtes Sackloch 53 der Pfanne 51 eingreift. Der zylinderförmige Durchzug 54 und das Sackloch 53 der Pfanne 51 sind dabei so dimensioniert, daß eine Preßpassung erzielt wird, so daß das Gleitlager 52 auf einfache Weise montiert und ggf. auch wieder demontiert werden kann. Der zylinderförmige Durchzug 54 ist ungefähr im Zentrum bzw. der Mitte des Gleitlagers 52 ausgebildet.

Ein weitere Aspekt der Erfindung liegt darin, daß die Kugel 50 des Kugelpfannenlagers vorzugsweise aus einer in eine entsprechende halbkugelförmige Ausnehmung 55a (Fig.3) bzw. 55b (Fig.2) der Druckstange 48 bzw. des Hebelarms 4a eingesetzten oder auch eingeschweißten Wälzlagerkugel besteht. Eine derartige Wälzlagerkugel ist als Standard-Bauteil verfügbar und daher trotz ihres hohen Härtungsgrades wesentlich billiger als die Durchführung eines entsprechenden Härtungsprozesses eines ansonsten erforderlichen Halbkugel-Ansatzes der Druckstange 48 bzw. des Hebelarms 4a. Darüber hinaus hat eine derartige Wälzlagerkugel 50 nahezu ideale Oberflächeneigenschaften bzw. eine hervorragende Rundheit. Die Wälzlagerkugel 50 wird im übrigen vorzugsweise durch Reibschweißung in der halbkugelförmigen Ausnehmung befestigt; ggf. kann auch ein Klemmsitz in Erwägung gezogen werden.

Bezüglich noch weiterer, nicht näher erläuterter Merkmale und Wirkungen der Erfindung wird ausdrücklich auf die Offenbarung der Figuren verwiesen.

## Patentansprüche

1. Druckluftbetätigte Scheibenbremse mit einem eine Bremsscheibe *(1)* umfassenden Bremssattel *(2)*, auf dessen einer Seite eine Zuspannvorrichtung *(3)* mit einem schwenkbar gelagerten Drehhebel *(4)* angeordnet ist, dessen Hebelarm *(4a)* mit der Druckstange *(47, 48)* eines Druckluftzylinders *(40)* über ein Kugelpfannenlager *(50, 51)* gelenkig in Eingriff steht und der über einen Exzenter *(6)* auf eine bezüglich der Bremsscheibe *(1)* verschiebbar geführte Traverse *(7)* einwirkt, die bei Druckluftbeaufschlagung des Druckluftzylinders *(40)* und entsprechender Verschwenkung des Drehhebels *(4)* eine an ihrem bremsscheibenseitigen Ende angeordnete Bremsbacke *(10)* gegen die Bremsscheibe *(1)* drückt,
*dadurch gekennzeichnet,*
daß zwischen der Kugel (50) und der Pfanne (51) des Kugelpfannenlagers ein Gleitlager (52) angeordnet ist, dessen druckbeaufschlagte Gleitfläche aus mindestens **70** Vol.-% Polyvinylidenfluorid, mindestens **10** Vol.-% Polytetrafluoräthylen und im übrigen aus Blei besteht.

2. Scheibenbremse nach Anspruch 1, dadurch gekennzeichnet, daß die Gleitfläche des Gleitlagers *(52)* aus ca. **80** Vol.-% Polyvinylidenfluorid, ca. **10** Vol.-% Polytetrafluoräthylen und ca. **10** Vol.-% Blei besteht.

3. Scheibenbremse nach Anspruch 1 oder 2, dadurch gekennzeichnet, daß in der druckbeaufschlagten Gleitfläche des Gleitlagers (52) Schmiertaschen ausgebildet sind.

4. Scheibenbremse nach einem der Ansprüche 1 bis 3, dadurch gekennzeichnet, daß die druckbeaufschlagte Gleitfläche des Gleitlagers (52) zwischen **0.05** und 0.1 mm dick ist.

5. Scheibenbremse nach einem der Ansprüche 1 bis 4, dadurch gekennzeichnet, daß zwischen der druckbeaufschlagten Gleitfläche des Gleitlagers (52) und einer Träger-Basisschicht eine poröse Zwischenschicht aus Bronze angeordnet ist, die vorzugsweise aus **9** bis **12** % Zinn, maximal 12 % Blei und Rest Kupfer besteht.

6. Scheibenbremse nach Anspruch 5, dadurch gekennzeichnet, daß die Träger-Basisschicht des Gleitlagers (52) aus Stahl gebildet ist.

7. Scheibenbremse nach einem der Ansprüche 1 bis 6, dadurch gekennzeichnet, daß das Gleitlager (52) im geschmierten Zustand betrieben wird.

8. Scheibenbremse nach einem der Ansprüche 1 bis 7, dadurch gekennzeichnet, daß die druckbeaufschlagte Gleitfläche des Gleitlagers (52) so dimensioniert ist, daß die bei maximaler Druckbeaufschlagung auftretende Lagerbeanspruchung mindestens **200** N/mm2, vorzugsweise bis zu **300** N/mm2 beträgt.

9. Scheibenbremse nach einem der Ansprüche 1 bis 8, dadurch gekennzeichnet, daß der Umschlingungswinkel des Gleitlagers (52) wenigers als **120** Grad beträgt.

10. Scheibenbremse nach einem der Ansprüche 1 bis 9, dadurch gekennzeichnet, daß im Gleitlager *(52)* ein zur Pfanne *(51)* weisender zylinderförmiger Durchzug *(54)* ausgebildet ist, der in ein entsprechend geformtes Sackloch *(53)* der Pfanne *(51)* eingreift.

11. Scheibenbremse nach Anspruch 10, dadurch gekennzeichnet, daß der zylinderförmiger Durchzug *(54)* und das Sackloch *(53)* der Pfanne *(51)* so dimensioniert sind, daß eine Preßpassung erzielbar ist.

12. Scheibenbremse nach Anspruch 10 oder 11, dadurch gekennzeichnet, daß der zylinderförmiger Durchzug *(54)* im Zentrum des Gleitlagers *(52)* ausgebildet ist.

13. Scheibenbremse nach einem der Ansprüche 1 bis 12, dadurch gekennzeichnet, daß die Pfanne *(51)* am Hebelarm *(4a)* des Drehhebels *(4)* ausgebildet ist.

14. Scheibenbremse nach einem der Ansprüche 1 bis 12, dadurch gekennzeichnet, daß die Pfanne *(51)* am Ende der Druckstange *(47, 48)* des Druckluftzylinders *(40)* ausgebildet ist.

15. Scheibenbremse nach Anspruch 13 oder 14, dadurch gekennzeichnet, daß die Kugel *(50)* des Kugelpfannenlagers aus einer in eine entsprechende halbkugelförmige Ausnehmung *(55a, 55b)* der Druckstange *(47, 48)* bzw. des Hebelarms *(4a)* eingesetzten oder eingeschweißten Wälzlagerkugel *(50)* besteht.

16. Scheibenbremse nach Anspruch 15, dadurch gekennzeichnet, daß die Wälzlagerkugel *(50)* durch Reibschweißung in der halbkugelförmigen Ausnehmung *(55a, 55b)* befestigt ist.
